# EUROPEAN PATENT SPECIFICATION

(11) **EP 4 069 911 B1**
(45) Date of publication and mention of the grant of the patent: **07.06.2023**
(21) Application number: 20830315.6
(22) Date of filing: 04.12.2020
(51) Int. Cl.: E04B 1/68, E04B 1/76, E04B 1/80, E04B 2/70, E04C 2/16, E04B 7/22, E04B 1/74

(54) **PREFABRICATED BOARDING FOR CLADDING A WOODEN FRAME OF A BUILDING WITH WALLS AND METHOD FOR APPLYING SUCH A PREFABRICATED BOARDING TO A WOODEN FRAME**
VORGEFERTIGTE VERSCHALUNG ZUR VERKLEIDUNG EINES HOLZRAHMENS EINES GEBÄUDES MIT WÄNDEN UND VERFAHREN ZUM ANBRINGEN EINER SOLCHEN VORGEFERTIGTEN VERSCHALUNG AN EINEM HOLZRAHMEN
BARDAGE PRÉFABRIQUÉ POUR L'HABILLAGE D'UNE OSSATURE EN BOIS D'UN BÂTIMENT AVEC DES MURS ET PROCÉDÉ D'APPLICATION D'UN TEL BARDAGE PRÉFABRIQUÉ SUR UNE OSSATURE EN BOIS

(30) Priority: 04.12.2019 BE 201905869
(43) Date of publication of application: 12.10.2022
(73) Proprietor: Woodinc, Besloten Vennootschap met Beperkte Aansprakelijkheid, 2470 Retie (BE); Universiteit Hasselt, 3500 Hasselt (BE)
(72) Inventor: VAN DE HEYNING, Eric, Retie 2470 (BE); JANSSENS, Bart, 3590 Diepenbeek (BE)
(74) Representative: Arnold & Siedsma
(86) International application number: PCT/IB2020/061512
(87) International publication number: WO 2021/111398

(56) References cited:
- DE-U1- 9 405 728
- DE-U1- 20 308 811
- DE-U1- 29 713 151
- JP-A- H10 325 194

## Description

Prefabricated boarding for cladding a wooden frame of a building with walls and method for applying such a prefabricated boarding to a wooden frame.

The present invention concerns first and foremost a prefabricated boarding for cladding a wooden frame of a building with walls.

More specifically, the invention relates to such a prefabricated boarding meant for exterior and/or interior wall cladding, thermally insulating and/or sealing a wooden frame of a building.

In particular, the prefabricated boarding according to the invention is designed for use on a wooden frame erected according to the so-called beam and post method, wherein the wooden frame consists of a reinforced right-angled structure of large, heavy posts and beams.

However, it is not excluded from the invention to apply such a prefabricated boarding to other structures, such as, for example, a building with a load-bearing base made of concrete or a steel construction or the like. Of course, the mechanical connections are adapted in such variant applications. Where there are screws, these may be replaced by bolts, for example.

The pile and beam method, also referred to as heavy framework, consists of a reinforced, right-angled structure of large, heavy posts and beams.

In contrast to light timber frame constructions, this system allows to create large open spaces, larger window openings and high storeys.

It is also very useful for halls, large collective spaces and the like.

This building system has centuries of history and was originally developed by the Celts.

From the 1980's it was perfected in Japan, and recently the system was adapted to European standards and the technique was reintroduced in Europe.

For the assembly of the wooden frame, use is made of pegs and other coupling means with which connections between the beams and posts can be made without the use of glue, nails and the like.

Of course, it is not excluded from the invention to apply such a prefabricated boarding according to the invention to other structures assembled with other techniques and/or made from other materials.

Building with wood is gaining momentum because of the desire to build in an ecological, sustainable and recyclable way.

A well-known insulating construction up against wooden posts is described in JPH10325194.

A plywood panel is provided with an insulating material based on resin foam on the side which is to be facing the inside of a structure.

For this purpose, the insulating material based on resin foam is provided exactly to size in advance, in accordance with the distance between the load-bearing columns.

The plywood panel is provided with a sealing material beforehand, on the same side and up against the edge of the insulation.

The whole of it is nailed to columns.

This structure and working method are disadvantageous in that they are labour-intensive because they are applied on site.

The present invention aims to offer a solution for the efficient installation of walls, floors, roofs on such a framework or skeleton constructed of wooden beams and posts.

One of the aims of the invention is to provide a prefabricated boarding which is also mainly made of wood and wherein the prefabricated boarding is built with prefabricated wall, floor and roof elements.

In the first instance, we think of prefabricated elements suitable for providing external walls, sloping and flat roofs and dwelling-separating floors on the wooden frame of the building to be constructed.

An existing insulation panel is described in DE9405728U1. The panel consists of two opposite surface elements made of wood wool and in between them a heat-insulating part made of wood shavings, finely divided sawdust and binding agents such as glue and/or resin substances, which components of the thermal insulation part are mixed and compacted to form a porous mass and which surface elements and thermal insulation part are joined together to form a coherent and solid construction.

Stiffening strips are provided in connection with the surface elements and at least one side of the building element is chamfered at an oblique angle to the direction of the surface elements.

A limitation is that such a building element is provided between beams and that the wedge-shaped openings entail an inferior fixation and insulation, even if the wedge-shaped openings are filled with wedge-shaped elements, for example made of cellular rubber.

DE29713151 describes another well-known wall module consisting of a frame element with a plate, which is soft with laterally provided support elements and a rigid, statically load-bearing frame construction, which can be modularly combined to form a complete wall, for example used in prefabricated houses and interior construction.

A disadvantage of using prefabricated wall modules with a frame construction or surrounding frame is that they entail openings and gaps between the modules when installed. It is now known that airtightness and a uniform insulation quality over the wall surface are essential requirements of a well insulated wall.

The invention aims to provide an adequate answer to it.

Secondly, the aim is also for the prefabricated walls forming the prefabricated boarding to be also suitable for constructing internal walls and internal floors as well as house-partition walls.

Since it is a renewed technique, according to the state of the art there are few if any comparable prefabricated elements known for manufacturing a prefabricated boarding, with which a frame made of wooden beams and posts can be clad in a way that makes the prefabricated boarding suitable for the purposes mentioned above and certainly not for any direct application such as a wall, floor or roof in modern buildings equipped with such a wooden frame and meeting all the technical and comfort requirements for the occupants or users.

Most known prefabricated boardings form only a small part of the walls, floors or roofs in which they are used.

In other cases they do not provide sufficient protection against rain and wind, separate thermal and/or acoustic insulation must be provided or such insulation is simply not applied.

Furthermore, the known prefabricated boardings are generally structurally insufficiently strong to be used directly as a floor, roof or exterior wall without any additional structural means on a wooden frame.

The known prefabricated boardings are also generally only roughly finished and cannot serve as an interior finish for a modern building.

The present invention therefore aims to offer a solution to one or more of the aforementioned and/or other disadvantages.

More specifically, the invention aims to provide a prefabricated boarding composed mainly of prefabricated elements, with the exception of smaller additional devices, which can be used to clad a timber frame described above and which meets the general technical building requirements, such as, for example, thermal and acoustic insulation, fire safety and which has good hygroscopic properties.

Another aim of the invention is to provide a solution which allows parts of the prefabricated boarding to be easily recovered or recycled and wherein the solution provided is composed mainly of materials which are ecologically sound.

Another aim of the invention is to design a prefabricated boarding in which techniques to be applied can be easily integrated, wherein for example, pipes for electricity, home automation, water, gas and the like can be easily concealed in the prefabricated boarding.

Another aim of the invention is to provide the most cost-efficient solution possible, wherein in addition to keeping the cost of the prefabricated boarding itself as low as possible, an attempt is also made to minimize the operations during the building process itself as much as possible and to speed up the building process.

Another aim of the invention is to design a prefabricated boarding that can be used in a wide variety of architectural building styles and that can be used to achieve a very wide range of aesthetic preferences.

In summary, the main objective is to provide a prefabricated boarding that efficiently provides a high-quality wall.

To this end, the invention concerns a prefabricated boarding according to claim 1.

A major advantage is that, unlike all existing prefabricated boardings, a form-retaining and dimensionally stable solution is nevertheless provided which leaves few or no cracks when walls are built with such boardings.

Indeed, the second layer, which ensures the stability of the wall, provides form retention and dimensional stability, in contrast to prefabricated boardings which are manufactured with a frame construction or surrounding frame.

The boarding according to the present invention does not have a surrounding frame and is therefore dimensionally stable.

What's more, apart from the dimensional stability, this also results in homogeneous walls. Indeed, this construction with the first, heat-insulating layer, which consists of a wood fibre board, and the second layer, which ensures the stability of the wall, which is vapour-tight and air-tight, offers an additional and elementary advantage.

As the layers are not surrounded by a frame, they can mainly butt up against each other when assembled. A homogeneous wall is obtained. In other words, all crucial properties of a wall system, such as vapour tightness, air tightness, insulation value, wind tightness and primary resistance to rain impact, have a uniform, homogeneous character all over the wall.

In other words, there are no weak zones, thanks to and despite the prefabrication.

According to the invention, the first and second layers are aligned and extend to the end faces of the sandwich panels.

A major advantage of such prefabricated boardings according to the invention, in particular of such a first cladding of prefabricated boardings which can serve as exterior cladding, is that it is built of simple, ecological elements in the form of sandwich panels which are provided with a few additional sealing elements.

Such sandwich panels can be very easily attached to the wooden frame, in particular by screwing them to the latter with specially designed self-tapping screws.

In addition, the rubber strips ensure a good seal between the prefabricated boarding and the wooden frame.

For example, there is no tongue and groove connection between adjacent sandwich panels, so that, for example, a disassembly for removing a sandwich panel from the wooden frame can be done without any problems.

Such a first cladding of such a prefabricated boarding according to the invention is also particularly suitable for use in the relatively cold and humid European climate. After all, the sandwich panels are meant to be attached to the outside of the wooden frame of the building to be constructed, so that the wooden frame on which the prefabricated boarding is to be applied is also thermally insulated.

An interesting feature of such a prefabricated boarding is that the thermal insulation, which is formed by the first layer of a wood fibre board, is provided as far as possible to the outside of the prefabricated boarding and that this thermal insulation is vapour-permeable and moisture-regulating.

Both the first, heat-insulating layer and the second layer, which ensures the stability of the wall, extend to the end faces of the sandwich panels. There is no supporting frame or framework around the first and second layers.

In a preferred embodiment of a prefabricated boarding according to the invention, the first cladding also includes a rubber seal applied or to be applied on the end faces of the sandwich panels between adjoining sandwich panels.

Such a rubber seal ensures a good seal between adjacent sandwich panels of the prefabricated boarding itself.

In yet another preferred embodiment of a prefabricated boarding according to the invention, the sandwich panels of the first cladding contain a second layer, which ensures the stability of the wall, is vapour-tight and air-tight and which consists of a plywood board, an OSB ("Oriented Strand Board") or an LVL ("Laminated Veneer Lumber") board. However, it is not excluded from the invention to use yet other materials for manufacturing this second layer of the sandwich panels.

In yet another preferred embodiment of a prefabricated boarding according to the invention, the sandwich panels of the first cladding comprise a third, protective layer meant as outer protection against wind and rain and which may also have a load-bearing function, wherein this third, protective layer consists of a wood fibre board applied against the first, thermally insulating layer.

Such an embodiment of a prefabricated boarding according to the invention is particularly suitable for use as an outer wall on the wooden structure made of beams and posts and to be clad with walls.

Of course, the protective layer has a protective function here and ensures in particular that the cold side of the thermal insulation, formed by the first layer of a wood fibre board, is made water, wind and dust-tight.

It is important to note that, according to the invention, the cold side of the thermal insulation is vapour-permeable however, so that the whole consisting of the first, thermally insulating layer and the third, protective layer can breathe as it were.

Furthermore, the third, protective layer of the first cladding of the prefabricated boarding is preferably structurally strong enough to be able to support a suspended facade, roofing or plastering or the like.

In typical embodiments of a prefabricated boarding according to the invention, the third, protective layer of the first cladding of the prefabricated boarding, which consists of a wood fibre board, has a density of 265 kg/m³ or about 265 kg/m³ or is preferably situated within a range of 250 kg/m³ and 280 kg/m³.

In a similar way, in typical embodiments of a prefabricated boarding according to the invention, the first, thermally insulating layer of the first cladding of the prefabricated boarding, which also consists of a wood fibre board, has a density of 160 kg/m³ or about 160 kg/m³ or preferably lies within a range of 145 kg/m³ and 175 kg/m³.

Such wood fibre boards with the above-mentioned densities appear to have the right properties to fulfil their function in the first cladding of the prefabricated boarding.

In a further preferred embodiment of a prefabricated boarding according to the invention, the first cladding of the prefabricated boarding is also provided with a vapour barrier applied to the second layer.

It is after all the intention according to the invention to make the warm side of the thermal insulation air and vapour-tight.

In the prefabricated boarding according to the invention the layers of the sandwich panels and any additional battens fitted to them are connected to each other by means of self-tapping wood screws made preferably of carbon steel or stainless steel.

This again contributes to a simple assembly and disassembly of different parts of the sandwich panels themselves. Thanks to the mounting method, a boarding can also be integrally detached from the structure and reused elsewhere. Reuse with others is possible at the level of the boarding and at the level of the constituent layers.

In yet another preferred embodiment of a prefabricated boarding according to the invention, the prefabricated boarding is also provided with a second cladding, which can serve as an inner cladding and which includes at least the following elements:
- a thermally insulating layer formed by one or more wood fibre boards and meant to be applied between the beams and posts of the frame against the sandwich panels of the first cladding; and,
- a finishing layer consisting of one or more plasterboard panels to be applied to the side of the beams and posts which is opposite to the side of these beams and posts against which the sandwich panels of the first cladding of the prefabricated boarding have been or will be applied.

Such a prefabricated boarding with a first cladding and a second cladding is ideally suited for cladding a timber structure of beams and posts, wherein an additional thermally insulating layer is applied to the sandwich panels of the first cladding, which can make a significant contribution to the overall thermal insulation of the prefabricated boarding.

In addition, with such a prefabricated boarding, the wooden frame is also completely finished on the side of the second cladding by means of the finishing layer consisting of plasterboard panels.

In a preferred embodiment of a prefabricated boarding according to the invention, a cavity is left between the thermally insulating layer and the finishing layer of the second cladding, which can serve as an intermediate space for installing and concealing piping.

The invention also relates to a method for applying a prefabricated boarding according to the invention as described above, for cladding walls on the outside and/or inside, for thermally insulating and sealing a wooden frame of a building erected according to the beam and post method, wherein the wooden frame consists of a reinforced right-angled structure of large, heavy posts and beams.

It is characteristic of this method according to the invention that the method includes at least the step of applying the sandwich panels of the first cladding of the prefabricated boarding with the rubber strips up against the outward facing sides of the frame formed of beams and posts and screwing them in using self-tapping screws, wherein, in case no second cladding is used, the screws are screwed from the side of the relevant sandwich panels towards the frame, while, in case a second cladding is used, the screws are screwed from the side of the frame towards the relevant sandwich panels.

A major advantage of such a method according to the invention is that the installation of the prefabricated boarding can only be done with self-tapping screws and can therefore be done very quickly and that the prefabricated boarding as a whole can also be easily disassembled again.

Another major advantage of such a method according to the invention is that, depending on whether or not a second cladding is used, the screws are screwed in from a different side, so that in either case the heads of the screwed-in screws are concealed from sight.

In order to better explain the characteristics of the invention, the following preferred embodiments of a prefabricated boarding according to the invention, as well as a method according to the invention for applying such a prefabricated boarding on the wooden frame of a building are described below by way of example only without being limitative in any way, with reference to the accompanying drawings, in which:
figures 1 to 3 show in perspective some examples of possible wooden frames made of beams and posts on which a prefabricated boarding according to the invention can be applied;
figure 4 schematically shows a set of elements with which a prefabricated boarding according to the invention can be made;
figures 5 to 12 included schematically represent, seen as a cross-section, different embodiments of a prefabricated boarding according to the invention, applied to a part of a wooden frame;
figures 13 and 14 show in side view and in top view respectively a screw which is preferably used in a method according to the invention;
figure 15 schematically shows, as in figure 4, another set of elements with which a number of alternative embodiments of a prefabricated boarding according to the invention can be made;
figures 16 to 18 included schematically show different embodiments of a prefabricated boarding according to the invention, which can be made with the set of elements shown in figure 15;
figure 19 schematically shows, as in figures 4 and 15, another set of elements with which a number of alternative embodiments of a prefabricated boarding according to the invention can be made; and
figures 20 to 22 included schematically represent, as a cross-section, different embodiments of a prefabricated boarding according to the invention, which can be made with the set of elements shown in figure 19.

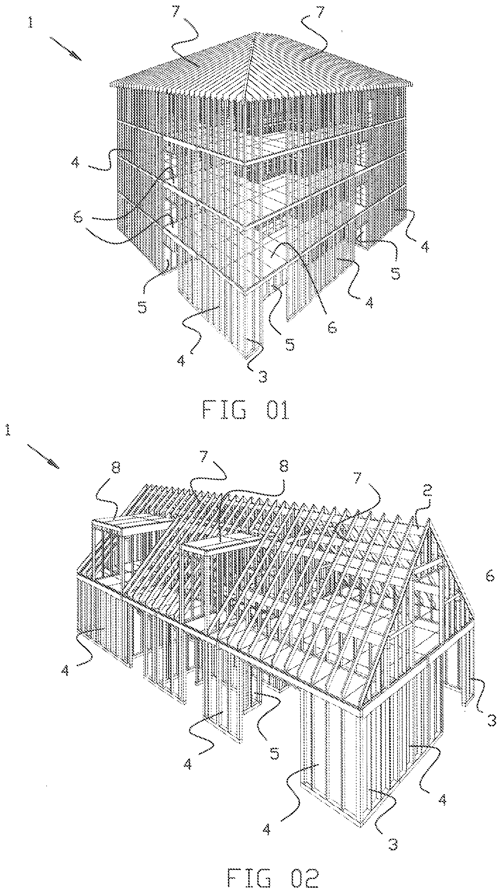

Figures 1 to 3 show a number of examples of a wooden frame 1 for a building, wherein the wooden frame 1 is erected according to the so-called beam and post method.

The wooden frame 1 consists of a reinforced right-angled structure of girders 2 and posts 3, coupled to one another with coupling means and pegs, which are not shown in the figures, but typically but not necessarily without the use of bolts, screws and/or nails or the like.

It is clear that, in order to obtain a usable building, such a wooden frame 1 must be clad with walls, for example with outer walls at the sections 4 of the frame 1 or with inner walls, for example at the sections 5 of the frame 1.

Other sections 6 of the frame 1 are to be provided with a floor and yet other sections 7 with a sloping roofing, while sections 8 are to be provided with a flat roofing.

A further distinction can be made here between sections where the walls or floors to be fitted form a partition between two separate dwellings or where they are merely walls or floors within the same dwelling.

It can be assumed that greater requirements are imposed on walls or floors separating dwellings, for example in terms of sound insulation and the like.

More specifically, the invention relates to a prefabricated boarding meant for cladding walls on the outside and/or inside, for thermally insulating and/or sealing such a wooden frame 1 of a building.

The present invention provides for a prefabricated boarding 9 typically designed for use on such a wooden frame 1.

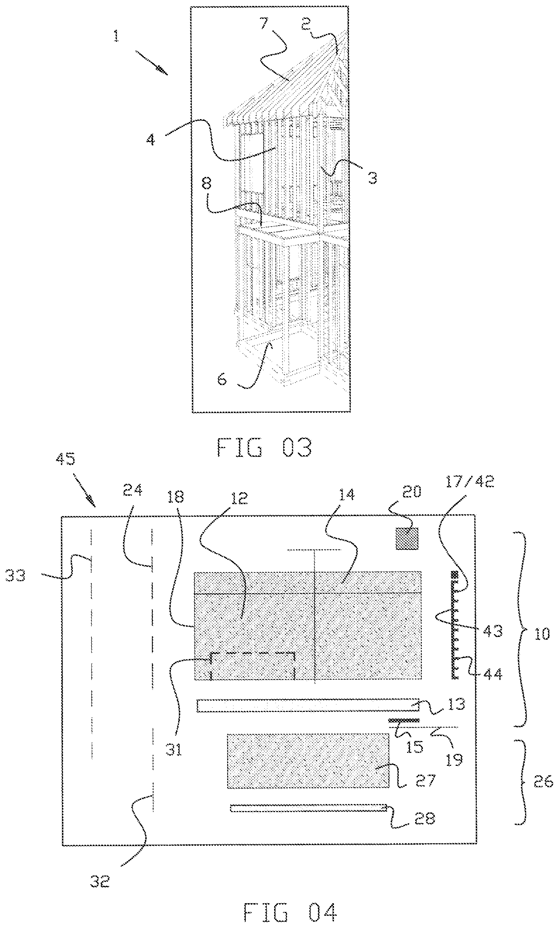

Figure 4 schematically shows a number of elements from which such a prefabricated boarding 9 according to the invention can be assembled.

The prefabricated boarding 9 herein includes at least elements for a first cladding 10, which can be used as exterior cladding.

This first cladding 10 is formed of prefabricated sandwich panels 11 comprising at least a first, heat-insulating layer 12 and a second layer 13 which ensures the stability of the relevant wall to be manufactured.

The first, heat-insulating layer 12 consists of a wood fibre board, which typically has a density of 160 kg/m³.

The second layer 13, which ensures stability, is vapour-tight and air-tight and preferably consists of a plywood board, an Oriented Strand Board (OSB) or a Laminated Veneer Lumber (LVL) board.

According to the invention, the sandwich panels 11 may include a third, protective layer 14, which is meant as outer protection against wind and rain and which may also have a load-bearing function.

Such a protective layer 14 according to the invention will typically be applied to sections of the prefabricated boarding 9 which form the outer walls of the frame 1.

In other sections of the prefabricated boarding 9, the protective layer 14 may also be omitted or replaced by yet another layer.

This third, protective layer 14 also consists of a wood fibre board which is applied to the first, heat-insulating layer 12.

However, according to the invention, the wood fibre board of this protective layer 14 has a higher density than the wood fibre board of the thermally insulating layer 12 and preferably has a density of 265 kg/m³ or about 265 kg/m³.

In addition, the first cladding 10 of the prefabricated boarding 9 is also fitted with a number of elongated rubber strips 15 which are to be used to cover and seal a side 16 of the beams 2 and posts 3 up against which such a sandwich panel 11 is provided.

These elongated rubber strips 15 are to be applied between the second, stability-ensuring layer 13 of the sandwich panels 11 and said beams 2 and posts 3.

In addition, the first cladding 10 of the prefabricated boarding 9 is also provided with a rubber seal or rubber seals 17 applied on the end faces 18 of the sandwich panels 11.

These rubber seals 17 are used to seal adjacent sandwich panels 11 in relation to each other.

In order to vapour-seal the first cladding 10 on the inside or, which comes down to the same, on the side of the frame 1 against which it is applied, the prefabricated boarding 9 is preferably also fitted with a vapour barrier 19 according to the invention, which is applied on the second layer 13 of the first cladding 10.

In cases where the first cladding 10 of the prefabricated boarding 9 is used to create an external wall or roofing, it may sometimes be necessary to additionally fit the sandwich panels 11 with battens 20 consisting of wooden slats 20 provided on either side 21 and 22 and in the centre 23 of said sandwich panel 11 according to the length of the sandwich panels 11.

Such battens 20 may be used to support a suspended facade or to provide a roofing on or the like.

The layers 12, 13 and 14 of the sandwich panels 11 and any provided battens 20 are connected to each other by means of self-tapping wood screws 24 specially designed for this purpose, as will be discussed further below.

For different reasons, for example to achieve an aesthetic finish on the inside of the frame 1, to achieve an even better thermal and/or acoustic insulation or, for example, to conceal all kinds of pipes 25, a prefabricated boarding 9 according to the invention can also be provided with a second cladding 26 which may serve as interior cladding.

This second cladding 26 first of all comprises a thermally insulating layer 27 formed by one or more wood fibre boards and meant to be fitted between the beams 2 and posts 3 of the frame 7 up against the sandwich panels 11 of the first cladding 10.

This thermally insulating layer 27 of the second cladding 26 of the prefabricated boarding 9, which is formed by one or more wood fibre boards, according to the invention preferably has a density of 160 kg/m³ or about 160 kg/m³, just like the first thermally insulating layer 12 of the first cladding 10.

However, according to the invention, the thermally insulating layer 27 of the second cladding 26 preferably has a thickness D which is at most half the thickness D' of the thermally insulating, first layer 12 of the first cladding 10 of the prefabricated boarding 9, although deviations thereof are of course not excluded from the invention.

The second cladding 26 also includes a finishing layer 28 consisting of one or more plasterboard panels to be typically applied on the side 29 of the beams 2 and posts 3, which is opposite to the side 16 of these beams 2 and posts 3 up against which the sandwich panels 11 of the first cladding 10 of the prefabricated boarding 9 are applied.

Between the thermally insulating layer 27 and the finishing layer 28 of the second cladding 26, a cavity 30 is typically left according to the invention, which can serve as an intermediate space 30 for installing and concealing pipework 25.

In another embodiment, it may be possible to embody the first cladding 10 and the second cladding 26 as one whole, forming prefabricated sandwich panels in which a finishing layer 28 consisting of plasterboard panels has already been incorporated.

This can be done, for example, by not providing a cavity 30 and by filling the intermediate space between the plasterboard panels and the first cladding 10 and/or the thermal insulation layer 27 with a thermal and/or acoustic insulation material, which also serves as a binding layer for the connection between the plasterboard panels and the first cladding 10 and/or the thermal insulation layer 27. The aim here is that in such a case, the second cladding 26 will lie entirely between the beams 2 and posts 3, wherein the seams formed between the plasterboard panels and these beams 2 and posts 3 can subsequently be sealed.

The beams 2 and posts 3 then remain in sight, which is also called the "Japanese look".

In other words, the plasterboard panels should not always be placed against the side 29.

Alternatively, the seams can also be concealed at a later stage with an additional plasterboard panel.

A central pillar can be included in the prefabricated cassette.

If no second cladding 26 is applied, a recess 31 can alternatively be provided in the first, thermally insulating layer 12 of the first cladding 10, more specifically on its side adjacent to the second layer 13.

The sandwich panels 11 of the first cladding 10, as well as the second cladding 26, are in a possible application according to the invention fixed to the wooden frame 1 by means of screws 24, 32 and/or 33, which, according to the invention, are preferably self-tapping screws with a special design, which will be further explained, and which are preferably made of carbon steel or stainless steel.

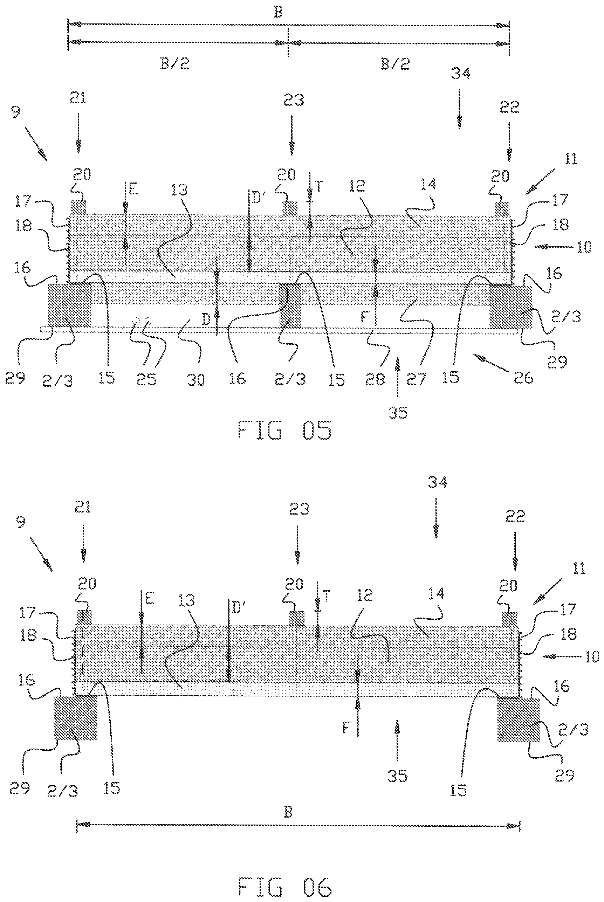

Figure 5 illustrates a first practical example in which both the first cladding 10 and the second cladding 26 of a prefabricated boarding 9 according to the invention are fixed by means of self-tapping screws 33 to beams 2 and posts 3 of a wooden frame 1 for a building.

In this case, the prefabricated boarding 9 serves as the outer wall of the frame 1 and the inside thereof is also finished with the second cladding 26.

The sandwich panels 11 of the first cladding are provided on the outside of the frame 1, its width B corresponding to the intermediate distance between the centre lines of the beams 2 or posts 3 of the frame 1.

The sandwich panels 11 typically have a width B of 125 cm and a length that may be typically 250 cm, 280 cm or 300 cm, although other dimensions are not excluded from the invention.

In this case, the prefabricated boarding 9 is also fitted with battens 20, for example for the installation of a suspended facade.

The battens 20 consists of wooden slats with a square cross section having a typical thickness T of 40 mm, but battens 20 with other dimensions are again not excluded from the invention either.

The thermally insulating, first layer 12 of the sandwich panels 11, as well as the thermally insulating layer 27 of the second cladding 26 may have a thickness D' and D which may vary greatly depending on the application, and as a function of the insulation value to be achieved.

For example, the total thickness D + D' may vary between 11 cm and 40 cm, but again other values are not excluded from the invention either.

The third protective layer 14 of the sandwich panels 11 in this case, wherein the sandwich panels 11 serve as an outer wall that must provide good protection against rain and wind, typically has a thickness E, which is 60 mm.

The second, stability-ensuring layer 13 of the sandwich panels 11, which typically consists of a plywood panel, an OSB or an LVL board, typically has a thickness F of 33 mm or 39 mm respectively, depending on whether a second cladding 26 or no second cladding 26 is used.

The latter case is shown as an example in figure 6.

The situation in figure 6 is completely analogous to that in figure 5, but no second cladding 26 was used, the thickness F of the second layer 13 in this case is 39 mm, and the screws 33 with which the sandwich panels 11 are screwed to the wooden frame 1 are screwed from the outside towards the frame 1, while in figure 5 these screws are screwed into the sandwich panels 11 from the inside, through the beams 2 and posts 3, before applying the second cladding 26.

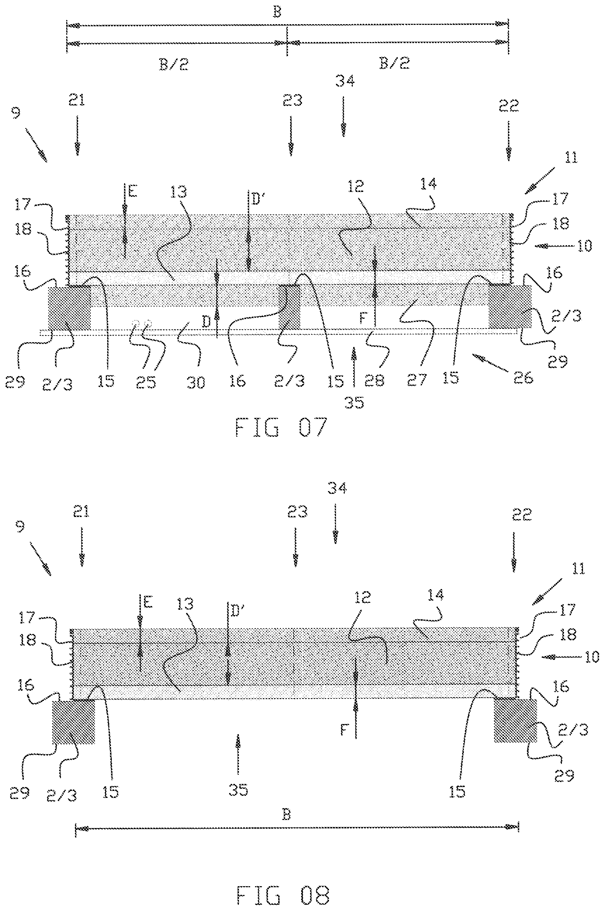

Figures 7 and 8 illustrate two other possible practical examples of the application of a prefabricated boarding 9 according to the invention, which are analogous to the situations of figures 5 and 6 respectively, because figures 7 and 8 also illustrate an application with a second cladding 26 and an application without a second cladding 26, both also with the aim of being able to serve as an outer wall.

The major difference with the previous examples, however, is that this time the sandwich panels 11 are not fitted with battens 20 and the aim is for a plaster layer to be applied on the outside 34 of the sandwich panels 11, directly on the protective third layer 14.

According to the invention, it is possible in this case to make the protective, third layer 14 of the sandwich panels 11 somewhat thinner, wherein it may suffice according to the invention to use a wood fibre board with a thickness E of 40 mm to this end.

As in figures 5 and 6, the thickness F of the second layer 13 of the sandwich panels 11 in figures 7 and 8 amounts to 33 mm and 39 mm respectively.

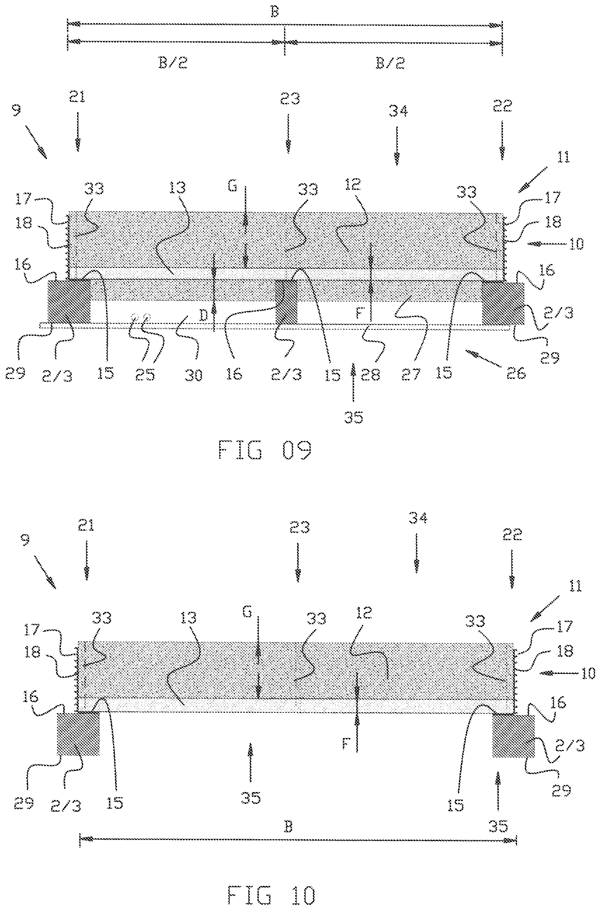

Figures 9 and 10 illustrate, in an analogous manner as in the previous figures, another application of a prefabricated boarding 9 according to the invention, wherein this time the prefabricated boarding 9 serves as an element of a flat roof or of a dwelling-separating floor.

In both cases, a first cladding 10 with prefabricated sandwich panels 11 is again applied to the beams 2 and/or posts 3 of the wooden frame 1, wherein this time the sandwich panels only comprise a first layer 12 and a second layer 13, however.

In the case of figure 9, a second cladding 26 is also provided on the other side 35 of the frame 1, as in the cases of figures 5 and 7, wherein this second cladding 26 is also completely identical to that in the previous cases. In the case of figure 10, no second cladding 26 is applied and the way in which the screws 33 are screwed in is still the same as previously explained, and it differs depending on whether a second cladding 26 is either or not used.

The thickness G of the first layer 12 and of the thermally insulating layer 27 of the second cladding 26 may vary as before, depending on the requirements to be achieved.

The second layer 13 still consists of a plywood board or an Oriented Strand Board with a thickness F, which in the case of figure 9, which is equipped with a second cladding 26, is 33 mm and in the case of figure 10, which has no second cladding 26, is 39 mm.

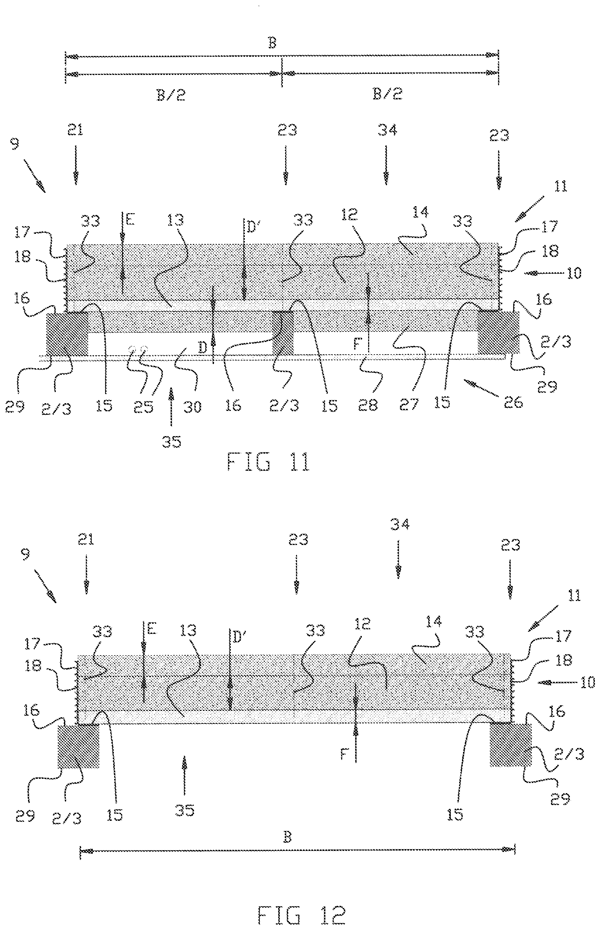

Figures 11 and 12 show, for the same application, namely for flat roofs and dwelling-separating floors, two other embodiments of a prefabricated boarding 9 according to the invention, with a second cladding 26 and without a second cladding 26, respectively.

In this case, as in figures 5 and 6, the sandwich panels 11 are again provided with a third, protective layer 14, which may, however, be slightly different due to its specific application as a roofing or as a dwelling-separating floor element.

The dimensions or thicknesses, however, are exactly the same as discussed with regard to the cases shown in figures 5 and 6.

In a method according to the invention, the sandwich panels 11 of the prefabricated boarding 9 with the rubber strips 15 are provided up against the frame 1 formed of wooden beams and posts, and they are screwed down using self-tapping screws 33, wherein, in case no second cladding 26 is used, the screws 33 are screwed in from the side 34 of the corresponding sandwich panels 11 towards the frame 1, while, in case a second cladding 26 is used, the screws 33 are screwed in from the side 34 of the frame 1 towards the corresponding sandwich panels 11.

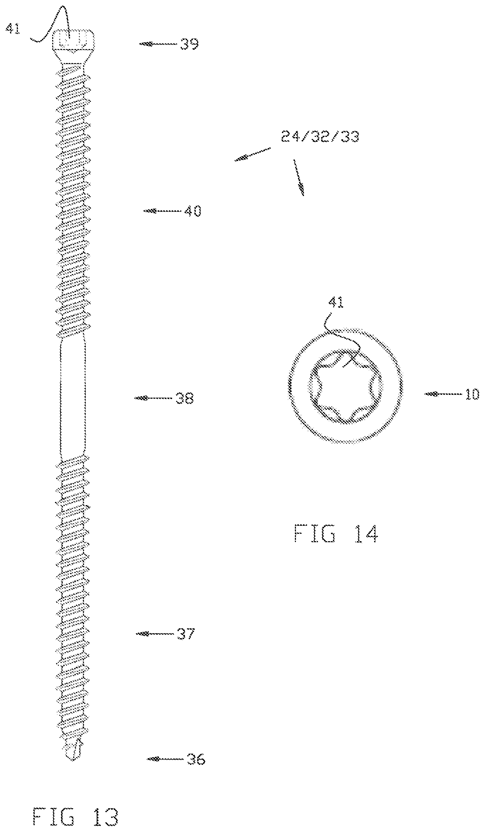

A self-tapping screw 33 specially developed for these operations is shown in figures 13 and 14.

Such self-tapping screws 33, as well as the other screws 24 and 32 that can be used to assemble the sandwich panels 11 and to fix the second cladding 26 as well, for example, include different sections with different profiles, which can be broken down as follows:
- a tip 36 in the form of a drill bit;
- an adjacent section 37 which is threaded;
- a smooth central section 38 which is not threaded;
- a head 39; and,
- a section 40 adjacent to the head 39 which is threaded and which extends to the smooth central section 38.

Preferably, the screws 24, 32 and 33 are made of stainless steel or carbon steel.

The head 39 is preferably designed as a section with socket 41, which for example assumes the shape of a hexagon or star.

In principle, the screws 33 shown in figure 4 are for securing the claddings 10 and 26 to the frame 1, while the screws 24 and 32 are for assembling the claddings 10 and 26.

Of course, this is only a schematic representation and all kinds of other types of screws or other types of fasteners or assembly means with other dimensions and shapes can be used to this end.

The same goes for the rubber seal 17, which is applied to the end faces 18 of the sandwich panels 11, to achieve a watertight seal between adjacent sandwich panels 11.

In the embodiments shown in figures 4 to 12, these seals 17 always have the form of a rubber bib or mat 42 with dimensions which correspond or practically correspond to the dimensions of the end faces 18 of the sandwich panels 11.

On one side 43, the rubber mat or bib 42 is flat in order to connect well to the end faces 18, while the opposite side 44 is ribbed in order to allow two such rubber mats 42 of adjoining sandwich panels 11 to fit closely together.

In this way, the entire surface on these end faces 18 is efficiently sealed, while a very reliable seal is also obtained between the sandwich panels 11.

It is of course not excluded according to the invention to design these rubber seals 17 differently as well.

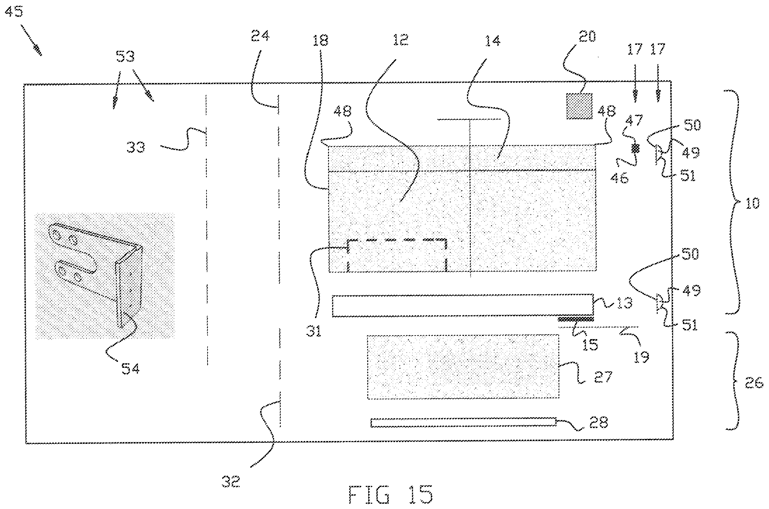

Figure 15 shows an alternative set of elements 45 with which other embodiments of a prefabricated boarding 9 according to the invention can be made by applying alternative methods according to the invention.

The set of elements 45 herein contains another type of rubber seals 17 consisting of elongated, rubber sealing profiles 46 with a square cross section 47.

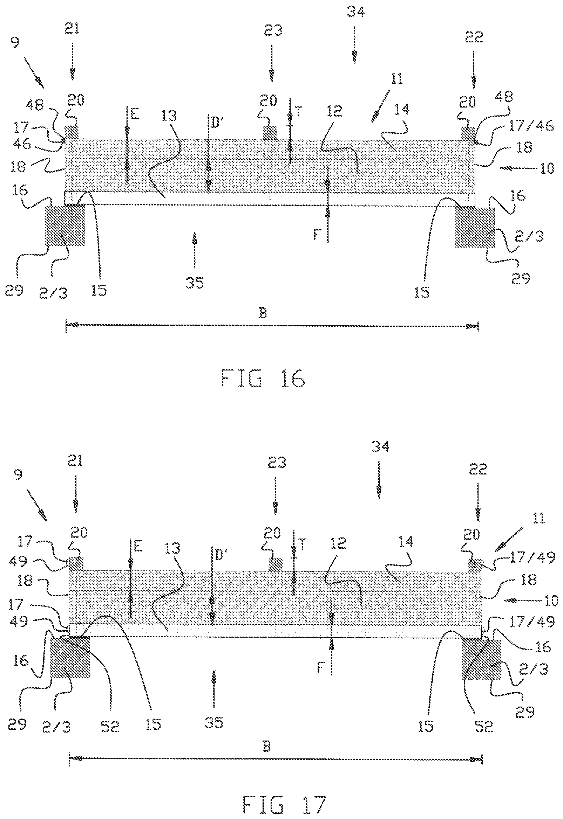

As shown in more detail in figure 16, the aim is that one specimen of such a rubber sealing profile 46 is fitted between two adjacent sandwich panels 11 at a time, more particularly at the respective most outward facing edges 48 of these sandwich panels 11.

The structure is preferably taped off beforehand.

In the embodiment shown in figure 16, the aim is to only apply the rubber sealing profiles 17, or more specifically to insert them in the joint between two sandwich panels 11, after the latter have already been fixed to the wooden frame 1.

This is another difference compared to what was the case in the embodiments illustrated in figures 4 to 12 included. The sandwich panels 11 are fixed to the wooden frame 1 with screws 33, the screws 33 being screwed from the side 34 of the corresponding sandwich panels 11 towards the frame 1. The set of elements 45 shown in figure 15 also includes yet another type of rubber seal in the form of sealing strips 49 designed for assembling pre-fabricated sandwich panels 11 which are also provided with a rubber seal 17 during manufacture, similar to the case in the examples shown in figures 5 to 12 included.

However, these rubber sealing strips 49 have a completely different shape and are more specifically designed as long, narrow strips 49, one side 50 of which is flat and the opposite side 51 of which convex.

The aim here is that, during prefabrication, each end face 18 of a sandwich panel 11 is to be fitted with a pair of such rubber sealing strips 49, more specifically on the slats of the battens 20 and at the most inwardly situated edges 52 of the sandwich panel 11.

This is illustrated in more detail in figure 17.

The sandwich panels 11 are again attached to the wooden frame 1 with screws 33 by screwing the screws from the outside 34 towards the inside 35.

Pairs of rubber sealing strips 49 of adjacent sandwich panels 11 hereby press together to form a seal between the respective adjacent sandwich panels 11.

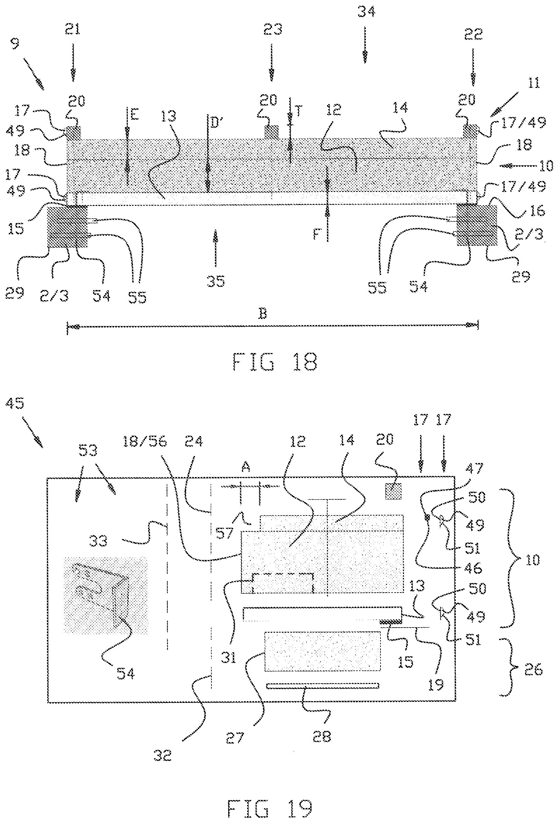

Figure 18 shows another alternative application, which is very similar to the previous one, as the same pairs of rubber sealing strips 49 are used for the intermediate sealing between two adjacent, prefabricated sandwich panels 11.

This time, however, no use is made of fasteners 53 in the form of screws 33 for attaching the sandwich panels 11 to the wooden frame 1, but use is made of fasteners 53 consisting of hook-shaped elements 54 on the one hand, as shown in figure 15, and pegs 55 on the other hand.

It is clear that, depending on the application, other sets of elements 45 may be used and other methods may be applied to assemble the prefabricated boarding 9 or to apply the prefabricated boarding 9 to a wooden frame 1.

Figure 19, for example, shows another alternative set of elements 45 with which other embodiments of a prefabricated boarding 9 according to the invention can be made by applying alternative methods according to the invention.

The difference with previous sets of elements 45 is rather subtle, since all the elements used have already been described in one way or another, as they are also applied in the other embodiments.

The second cladding 26 is completely identical as in the previous cases and even the first cladding 10 consists again of prefabricated sandwich panels 11 composed of a first thermally insulating layer 12 forming the core, a second stability-ensuring layer 13 forming the inside, and a third protective layer 14 forming the outside.

The third protective layer 14 still has a width B equal to the width B of the thermally insulating layer 12 and of the second stability-ensuring layer 13.

The major difference with previous sets of elements 45 is that this time the first cladding 10 consists of prefabricated sandwich panels 11, wherein the third protective layer 14 is no longer aligned with the other layers 12 and 13, but offset by a distance A with respect to these layers 12 and 13 before assembling the sandwich panels 11 and joining their layers 12 to 14.

As a result, the end faces 18 of the prefabricated sandwich panels 11 are no longer flat in this case, as was the case with the previous embodiments, but these end faces 18 have a stepped profile 56 in a cross-section.

This means that on one side 21 of the sandwich panel 11 thus obtained, the third protective layer 14 does not completely cover the first thermally insulating layer 12, thereby forming a recess 57.

On the other side 21 of the sandwich panel 11 thus obtained, however, a part of the third protective layer 14 extends beyond the edge of the first thermally insulating layer 12, thereby forming a stop 58.

It is clear that adjoining sandwich panels 11 manufactured in the same way can still be tightly fitted to one another, since a stop 58 of a first sandwich panel 11 obviously has the same size and is complementary to a recess 57 of the adjoining sandwich panel 11 and vice versa.

A major advantage of this embodiment of a set of elements 45 for a prefabricated boarding 9 according to the invention is that, when different prefabricated sandwich panels 11 are placed next to each other, a good seal is automatically obtained at the intermediate seams because of the stepped profile 56 at the end faces 18.

This form of connection is interesting from two points of view.

Indeed, despite the fact that, according to the invention, it is preferable not to use a tongue and groove joint as this causes problems with disassembly and re-use of the material, the advantages of a tongue and groove joint, such as a good connection and protection, are put to use in this case, while the stepped shape of the end faces 18 of the sandwich panels 11 in no way impedes the disassembly and re-use of the sandwich panels 11, thus avoiding the disadvantages of a tongue and groove joint.

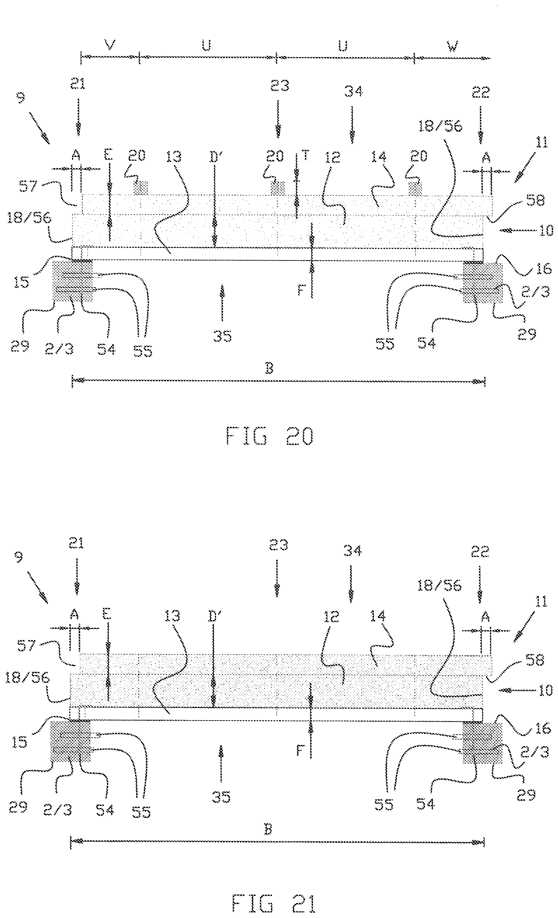

Figure 20 shows a first possible application which is in a sense similar to the application shown in figure 18, as fasteners 53 consisting of hook-shaped elements 54 and pegs 55 are again used to secure the sandwich panels 11 to the wooden frame 1.

There are also battens 20 on the outside 34 in the form of long slats.

A first major difference with the case of figure 18 is that no rubber seals 17 are used in figure 20.

In this case, a seal is obtained because the structure is preferably taped off in advance and because the stepped profile 56 of the end faces 18 of the adjoining sandwich panels 11 provide sufficient additional protection.

Another difference with previous embodiments is that the three slats of the battens 20 are no longer fitted on both sides 21 and 22 of the relevant sandwich panel 11, but are attached at an intermediate distance U from one another and parallel to one another to the relevant sandwich panel 11, this intermediate distance U being substantially smaller than half the width B/2 of the sandwich panel 11.

More specifically, it is ensured that, after tightly fitting uniform sandwich panels 11 next to each other, the slats of the battens 20 are situated at an equal intermediate distance U from one other.

In this case, a slat of the battens 20 is placed on one side 21 of the sandwich panel 11 at a distance V from the edge of the third protective layer 14, and a slat of the battens 20 is placed on one side 21 of the sandwich panel 11 at a greater distance W from the edge of the third protective layer 14.

The distance V is equal here to half the intermediate distance U between the slats of the battens 20 minus the distance A equal to the width of the recess 57.

Distance W is equal to half the intermediate distance U between the slats of the battens 20 increased by the distance A which is equal to the width of the stop 58.

Figure 21 shows another application that is completely similar to the case shown in figure 20, but with no battens 20 applied this time.

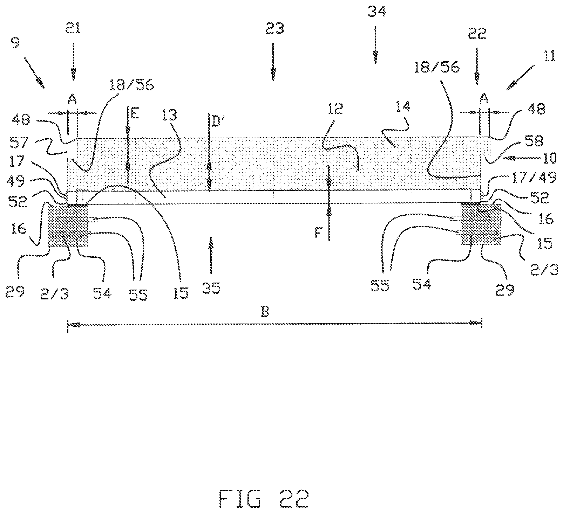

Figure 22 shows an application that can be considered to some extent as a combination of the embodiment shown in figure 18 and the embodiment shown in figure 20.

On the one hand, on the inner edges 52 on both sides 21 and 22 of the sandwich panels 11, a rubber sealing strip 49 with a flat side 50 and a convex side 51 has been applied, just as in the case of figure 18.

However, the difference with figure 18 is that the outer edges 48 are not provided with such rubber sealing strips 49.

The reason is that the sandwich panels 11 are constructed as in the set of elements 45 shown in figure 19.

In short, on the other hand, a seal is obtained at the outer edges 48 of the sandwich panels 11 by the stepped cross-section 56 of the sandwich panels 11.

The combination of the stepped profile 56 and the rubber sealing strips 49 results in a very reliable seal between the sandwich panels 11.

The invention is by no means limited to the embodiments of a prefabricated boarding 9 described by way of example and illustrated in the figures; on the contrary, such prefabricated boardings 9 can be achieved in many other ways while still remaining within the scope of the invention, as defined in the appended claims.

Neither is the invention limited to the embodiments of a method described by way of example and illustrated with reference to the figures; on the contrary, such a method can be carried out in many other ways while still remaining within the scope of the invention, as defined in the appended claims.

## Claims

1. Prefabricated boarding (9) designed for the exterior cladding, thermal insulation and sealing of the wooden frame (1) of a building constructed according to the beam and post method, wherein the wooden frame (1) consists of a reinforced right-angled structure of large, heavy posts (3) and beams (2), and wherein the prefabricated boarding (9) comprises at least a first cladding (10) which can serve as an outer cladding and which comprises at least the following elements:
- one or several sandwich panels (11) including at least a first, thermally insulating layer (12) which consists of a wood fibre board and a second layer (13) which ensures the stability of the wall, which second layer (13) is vapour-tight and air-tight which first and second layers (12, 13) are aligned and extend to the end faces (18) of the sandwich panels (11);
- one or more elongated rubber strips (15) for covering one outward facing side (16) of the beams (2) and posts (3) against which such a sandwich panel (11) is applied and which are configured to be provided between the second layer (13) of the sandwich panels (11) and said outward facing side of the beams (2) and posts (3); and,
- the layers of the sandwich panels (11) and battens (20) which may be present, are connected to each other only by means of self-tapping wood screws (24).

2. Prefabricated boarding (9) according to claim 1, **characterized in that** the second layer (13) ensuring the stability of the wall, is configured to provide form retention and dimension stability to the prefabricated boarding (9), and/or preferably consists of a plywood board, an OSB ("Oriented Strand Board") or an LVL board ("Laminated Veneer Lumber"), and/or has a thickness F of at least 33 mm.

3. Prefabricated boarding (9) according to any one of claims 1 to 2, **characterized in that** the sandwich panels (11) of the first cladding (10) comprise a third, protective layer (14) designed for outer protection against wind and rain and which may also have a load-bearing function, and/or wherein this third, protective layer (14) consists of a wood fibre board applied up against the first thermally insulating layer (12), and/or has a higher density than the wood fibre board of the thermally insulating layer (12); preferably a density between 250 kg/m³ and 280 kg/m³ and more preferably of 265 kg/m³.

4. Prefabricated boarding (9) according to one or several of the preceding claims, **characterized in that** the first cladding (10) is also provided with a vapour barrier (19) which is provided on the second layer (13).

5. Prefabricated boarding (9) according to one or several of the preceding claims, **characterized in that** the battens (20) when present consist of wooden slats provided on either side (21, 22) and centrally (23) on such a sandwich panel (11) according to its length, wherein the battens (20) may serve to support a suspended facade or to provide a roofing on.

6. Prefabricated boarding (9) according to one or several of the preceding claims, **characterized in that** the first cladding (10) comprises a rubber seal (17) which has been configured to be provided on the end faces (18) of the sandwich panels (11) between adjoining sandwich panels (11), preferably **characterized in that** the rubber seal (17) has one or several of the following shapes: a rubber bib or mat (42) on each end face (18) of a sandwich panel (11) with dimensions that correspond or practically correspond to the dimensions of the respective end face (18) of the sandwich panel (11);
- elongated, rubber sealing profiles (46) with a square cross section (47), one of which is each time provided between two adjoining sandwich panels (11), more specifically at the relevant outermost edges (48) of these sandwich panels (11);
- rubber seal strips (49), one side (50) of which is flat and whose opposite side (51) is convex, and wherein each end face (18) of a respective sandwich panel (11) is provided with a pair of such rubber seal strips (49), in particular on the slats of battens (20) and at the most inwardly situated edges (52) of the sandwich panel (11);
- rubber seal strips (49), one side (50) of which is flat and whose opposite side (51) is convex, and wherein each end face (18) of a respective sandwich panel (11) is provided with one such rubber seal strip (49), in particular at the most inwardly located edges (52) of the sandwich panel (11).

7. Prefabricated boarding (9) according to any one of claims 3 to 6, **characterized in** the third protective layer (14) having a width (B) that is equal to the width (B) of the thermally insulating layer (12) and of the second stability ensuring layer (13) is not aligned with the other layers (12, 13), but is offset by a distance (A) with respect to these layers (12, 13).

8. Prefabricated boarding (9) according to one or several of the preceding claims, **characterized in that** the prefabricated boarding (9) is also provided with a second cladding (26) which may serve as inner cladding and which comprises at least the following elements:
- a thermally insulating layer (27) which is formed by one or several wood fibre boards and which is to be placed between the beams (2) and posts (3) of the frame (1) against the sandwich panels (11) of the first cladding (10); and,
- a finishing layer (28) consisting of one or several plasterboard panels to be applied to the side of the beams (2) and posts (3) opposite the side (29) of these beams (2) and posts (3) against which the sandwich panels (11) of the first cladding (10) of the prefabricated boarding (9) have been or will be applied, and/or **in that** the first, thermally insulating layer (12) of the first cladding (10) of the prefabricated boarding (9), which consists of a wood fibre board, and/or the thermally insulating layer (27) of the second cladding (26) of the prefabricated boarding (9), which is formed by one or several wood fibre boards, has/have a density situated between 145 kg/m³ and 175 kg/m³ and which is preferably 160 kg/m³.

9. Prefabricated boarding (9) according to claim 8, **characterized in that** between the thermally insulating layer (27) and the finishing layer (28) of the second cladding (26) is left a cavity (30) which can serve as an intermediate space for installing and concealing pipework (25).

10. Prefabricated boarding (9) according to one or several of claims 8 to 9, **characterized in that** the thermally insulating layer (27) of the second cladding (26) has a thickness (D) which is at most half the thickness (D') of the thermally insulating, first layer (12) of the first cladding (10).

11. Use of a prefabricated boarding according to one or several of claims 1 to 10 as an outer wall on a building with a load-bearing base.

12. Method for applying a prefabricated boarding (9) according to one or several of claims 1-10 for exterior and/or interior wall cladding, thermally insulating and sealing the wooden frame (1) of a building which is erected according to the beam and post method, wherein the wooden frame (1) consists of a reinforced right-angled structure of large, heavy posts (3) and beams (2), **characterized in that** the method comprises at least the step of applying the sandwich panels (11) of the prefabricated boarding (9) with the rubber strips (15) against the outwardly facing sides of the frame (1) formed of beams (2) and posts (3) by of one of the following methods:
- by screwing them in by means of self-tapping screws (33); or, - through a screwless fastening.

13. Method according to claim 12, **characterized in that** the method comprises the step of providing a rubber seal (17) against one or more of the end faces (18) of the sandwich panels (11), designed to be placed between adjoining sandwich panels (11), and/or wherein the sandwich panels (11) are fixed with screws (33) and wherein, in case no second cladding (26) is applied, the screws (33) are screwed in from the side (34) of the respective sandwich panels (11) towards the frame (1), while, in case a second cladding (26) is applied, the screws (33) are screwed from the side of the frame (1) towards the respective sandwich panels (11), and/or wherein the sandwich panels (11) are screwlessly fixed to the frame (1) and wherein use is made of hook-shaped elements (54) and pegs (55).

14. Method according to one or several of claims 12 to 13, **characterized in that** the method comprises the step of providing a vapour barrier (19) against the second layer (13) of the sandwich panels (11) of the first cladding (10).

15. Method according to one or several of claims 12 to 14, **characterized in that** the method comprises the steps of applying a second cladding (26) by providing a thermally insulating layer (27) formed by one or several wood fibre boards between the beams (2) and posts (3) of the frame (1) against the sandwich panels (11) of the first cladding (10) and screwing it down with self-tapping screws (32, 33), and applying a finishing layer (28) consisting of one or more plasterboard panels on the side (29) of the beams (2) and posts (3), which is opposite the side (16) of these beams (2) and posts (3) and against which the sandwich panels (11) of the first cladding (10) are applied, and/or **in that**, when providing the first cladding (10), sandwich panels (11) are used that are provided with battens (20), wherein a suspended facade is subsequently hung from these battens (20) or a roofing is provided on the battens (20).

## Patentansprüche

1. Vorgefertigte Beplankung (9) zur Außenverkleidung, Wärmedämmung und Abdichtung des Holzrahmens (1) eines in Balken-Pfosten-Bauweise errichteten Gebäudes, wobei der Holzrahmen (1) aus einem bewehrten Rechteck Struktur besteht aus großen, schweren Pfosten (3) und Balken (2), und bei der die vorgefertigte Verschalung (9) mindestens eine erste Verkleidung (10) umfasst, die als äußere Verkleidung dienen kann und die mindestens die folgenden Elemente umfasst:
- eine oder mehrere Sandwichplatten (11) mit mindestens einer ersten, wärmedämmenden Schicht (12), die aus einer Holzfaserplatte besteht, und einer zweiten Schicht (13), die die Stabilität der Wand gewährleistet, wobei die zweite Schicht (13) dampfdicht und luftdicht ist, wobei die ersten und zweiten Schichten (12, 13) ausgerichtet sind und sich bis zu den Endflächen (18) der Sandwichplatten (11) erstrecken; und,
- einen oder mehrere längliche Gummistreifen (15) zum Abdecken einer nach außen gerichteten Seite (16) der Balken (2) und Pfosten (3), gegen die eine solche Sandwichplatte (11) angebracht wird, und die so konfiguriert sind, dass sie vorgesehen sind dazwischen die zweite Schicht (13) der Sandwichplatten (11) und die nach außen weisende Seite der Balken (2) und Pfosten (3); und
- die eventuell vorhandenen Lattung (20) und Lagen der Sandwichplatten (11) nur durch selbstschneidende Holzschrauben (24) miteinander verbunden sind.

2. Vorgefertigte Beplankung (9) nach Anspruch 1, **dadurch gekennzeichnet, dass** die die Stabilität der Wand gewährleistende zweite Schicht (13) zur Form- und Maßhaltigkeit der Vorgefertigte Beplankung (9) ausgebildet ist und/oder vorzugsweise besteht aus einer Sperrholzplatte, einer OSB ("Oriented Strand Board") oder einer LVL-Platte ("Laminated Veneer Lumber") und/oder hat eine Dicke F von mindestens 33 mm.

3. Vorgefertigte Beplankung (9) nach einem der Ansprüche 1 bis 2, **dadurch gekennzeichnet, dass** die Sandwichplatten (11) der ersten Verkleidung (10) eine dritte, schützende Schicht (14) aufweisen, die zum äußeren Schutz gegen Wind und Regen ausgelegt ist und die auch eine tragende Funktion haben kann, und/oder wobei diese dritte Schutzschicht (14) aus einer gegen die erste Wärmedämmschicht (12) aufgebrachten Holzfaserplatte besteht und/oder eine höhere Dichte als das Holz aufweist Faserplatte der thermisch isolierenden Schicht (12); vorzugsweise eine Dichte zwischen 250 kg/m 3 und 280 kg/m 3 und mehr bevorzugt von 265 kg/m 3 .

4. Vorgefertigte Beplankung (9) nach einem oder mehreren der vorhergehenden Ansprüche, **dadurch gekennzeichnet, dass** die erste Verkleidung (10) auch mit einer Dampfsperre (19) versehen ist, die auf der zweiten Schicht (13) vorgesehen ist.

5. Vorgefertigte Beplankung (9) nach einem oder mehreren der vorhergehenden Ansprüche, **dadurch gekennzeichnet, dass** die Lattung (20), falls vorhanden, aus beidseitig (21, 22) und mittig (23) an einer solchen Sandwichplatte vorgesehenen Holzlatten besteht (11) entsprechend seiner Länge, wobei die Lattung (20) zur Abstützung einer vorgehängten Fassade oder zur Bereitstellung einer Überdachung dienen kann.

6. Vorgefertigte Beplankung (9) nach einem oder mehreren der vorhergehenden Ansprüche, **dadurch gekennzeichnet, dass** die erste Verkleidung (10) eine Gummidichtung (17) umfasst, die dazu ausgebildet ist, an den Stirnseiten (18) des Sandwichs vorgesehen zu werden Paneele (11) zwischen benachbarten Sandwichpaneelen (11), vorzugsweise dadurch, dass die Gummidichtung (17) eine oder mehrere der folgenden Formen aufweist: ein Gummilappen oder eine Gummimatte (42) an jeder Stirnseite (18) eines Sandwichpaneels (11) mit Abmessungen, die den Abmessungen der jeweiligen Stirnseite (18) der Sandwichplatte (11) entsprechen oder praktisch entsprechen;
- längliche Gummidichtungsprofile (46) mit quadratischem Querschnitt (47), von denen jeweils eines zwischen zwei aneinandergrenzenden Sandwichplatten (11) vorgesehen ist, und zwar an den jeweiligen äußersten Rändern (48) dieser Sandwichplatten (11). );
- Gummidichtungsstreifen (49), von denen eine Seite (50) flach ist und deren gegenüberliegende Seite (51) konvex ist, und wobei jede Endfläche (18) einer jeweiligen Sandwichplatte (11) mit einem Paar solcher versehen ist Gummidichtungsstreifen (49), insbesondere an den Latten von Latten (20) und an den am weitesten innen liegenden Rändern (52) der Sandwichplatte (11);
- Gummidichtungsstreifen (49), deren eine Seite (50) eben und deren gegenüberliegende Seite (51) konvex ist, und wobei jede Stirnseite (18) einer jeweiligen Sandwichplatte (11) mit einer solchen Gummidichtung versehen ist Streifen (49), insbesondere an den am weitesten innen liegenden Rändern (52) der Sandwichplatte (11).

7. Vorgefertigte Beplankung (9) nach einem der Ansprüche 3 bis 6, **dadurch gekennzeichnet, dass** die dritte Schutzschicht (14) eine Breite (B) aufweist, die gleich der Breite (B) der Wärmedämmschicht (12) ist und der zweiten stabilitätssichernden Schicht (13) nicht mit den anderen Schichten (12, 13) fluchtet, sondern gegenüber diesen Schichten (12, 13) um einen Abstand (A) versetzt ist.

8. Vorgefertigte Beplankung (9) nach einem oder mehreren der vorhergehenden Ansprüche, **dadurch gekennzeichnet, dass** die Fertigschalung (9) auch mit einer zweiten Verkleidung (26) versehen ist, die als Innenverkleidung dienen kann und die zumindest die folgenden Elemente umfasst:
- eine wärmedämmende Schicht (27), die aus einer oder mehreren Holzfaserplatten besteht und die zwischen den Balken (2) und Pfosten (3) des Rahmens (1) gegen die Sandwichplatten (11) des Rahmens (1) anzuordnen ist erster Mantel (10); und,
- eine Deckschicht (28), bestehend aus einer oder mehreren Gipskartonplatten, die auf die Seite der Balken (2) und Pfosten (3) aufzubringen ist, die der Seite (29) dieser Balken (2) und Pfosten (3) gegenüberliegt die Sandwichplatten (11) der ersten Verkleidung (10) der Fertigschalung (9) aufgebracht wurden oder werden, und/oder dass die erste, wärmedämmende Schicht (12) der ersten Verkleidung (10) der vorgefertigte Beplankung (9), die aus einer Holzfaserplatte besteht, und/oder die wärmedämmende Schicht (27) der zweiten Verkleidung (26) der vorgefertigten Beplankung (9), die durch eine oder mehrere Holzfaserplatten gebildet ist, eine Dichte hat/haben, die zwischen 145 kg/m3 und 175 kg/m3 liegt und die vorzugsweise 160 kg/m3 beträgt.

9. Vorgefertigte Beplankung (9) nach Anspruch 8, **dadurch gekennzeichnet, dass** zwischen der Wärmedämmschicht (27) und der Deckschicht (28) der zweiten Verkleidung (26) ein Hohlraum (30) belassen ist, der als Zwischenschicht dienen kann Raum zum Verlegen und Abdecken von Rohrleitungen (25).

10. Vorgefertigte Beplankung (9) nach einem oder mehreren der Ansprüche 8 bis 9, **dadurch gekennzeichnet, dass** die Wärmedämmschicht (27) der zweiten Verkleidung (26) eine Dicke (D) aufweist, die höchstens der Hälfte der Dicke (D) der thermisch isolierenden, ersten Schicht (12) des ersten Verkleidung (10) entspricht.

11. Verwendung einer vorgefertigten Beplankung nach einem oder mehreren der Ansprüche 1 bis 10 als Außenwand an einem Gebäude mit tragendem Sockel.

12. Verfahren zum Anbringen einer vorgefertigten Beplankung (9) nach einem oder mehreren der Ansprüche 1-10 zur Außen- und/oder Innenwandverkleidung, Wärmedämmung und Abdichtung des balkengerecht errichteten Holzrahmens (1) eines Gebäudes und Pfostenverfahren, wobei der Holzrahmen (1) aus einer verstärkten rechtwinkligen Struktur aus großen, schweren Pfosten (3) und Balken (2) besteht, **dadurch gekennzeichnet, dass** das Verfahren mindestens den Schritt des Anbringens der Sandwichplatten (11) der vorgefertigten Beplankung (9) mit den Gummistreifen (15) gegen die nach außen weisenden Seiten des aus Balken (2) und Pfosten (3) gebildeten Rahmens (1) umfasst, durch eines der folgenden Verfahren:
- durch Einschrauben mittels selbstschneidender Schrauben (33); oder - durch eine schraubenlose Befestigung.

13. Verfahren nach Anspruch 12, **dadurch gekennzeichnet, dass** das Verfahren den Schritt des Bereitstellens einer Gummidichtung (17) gegen eine oder mehrere der Endflächen (18) der Sandwichplatten (11) umfasst, die dafür ausgelegt ist, zwischen angrenzenden Sandwiches Paneele platziert zu werden (11) und/oder wobei die Sandwichpaneele (11) mit Schrauben (33) befestigt sind und wobei, falls keine zweite Verkleidung (26) aufgebracht wird, die Schrauben (33) von der Seite (34) eingeschraubt werden der jeweiligen Sandwichplatten (11) zum Rahmen (1) hin, während bei Anbringung einer zweiten Verkleidung (26) die Schrauben (33) von der Seite des Rahmens (1) zu den jeweiligen Sandwichplatten (11) und/oder wobei die Sandwichplatten (11) schraubenlos an dem Rahmen (1) befestigt sind und wobei hakenförmige Elemente (54) und Zapfen (55) verwendet werden.

14. Verfahren nach einem oder mehreren der Ansprüche 12 bis 13, **dadurch gekennzeichnet, dass** das Verfahren den Schritt des Bereitstellens einer Dampfsperre (19) gegen die zweite Schicht (13) der Sandwichplatten (11) der ersten Verkleidung (10) umfasst.

15. Verfahren nach einem oder mehreren der Ansprüche 12 bis 14, **dadurch gekennzeichnet, dass** das Verfahren die Schritte des Aufbringens einer zweiten Verkleidung (26) umfasst, indem zwischen den Balken eine durch eine oder mehrere Holzfaserplatten gebildete Wärmedämmschicht (27) vorgesehen wird (2) und Pfosten (3) des Rahmens (1) gegen die Sandwichplatten (11) der ersten Verkleidung (10) und Verschrauben mit selbstschneidenden Schrauben (32, 33) und Aufbringen einer Deckschicht (28 ) bestehend aus einer oder mehreren Gipskartonplatten auf der Seite (29) der Balken (2) und Pfosten (3), die der Seite (16) dieser Balken (2) und Pfosten (3) gegenüberliegt und gegen die das Sandwich Paneele (11) anliegt der ersten Verkleidung (10) aufgebracht werden, und/oder dass beim Vorsehen der ersten Verkleidung (10) Sandwichpaneele (11) verwendet werden, die mit Lattungen (20) versehen sind, wobei eine vorgehängte Fassade vorliegt nachträglich an diese Latten (20) gehängt oder auf den Latten (20) eine Überdachung vorgesehen wird.

## Revendications

1. Bardage préfabriqué (9) destiné au revêtement extérieur, à l'isolation thermique et à l'étanchéité de l'ossature bois (1) d'un bâtiment construit selon le procédé poutres-poteaux, dans lequel l'ossature bois (1) est constituée d'une cornière renforcée structure de grands poteaux lourds (3) et de poutres (2), et dans laquelle le bardage préfabriqué (9) comporte au moins un premier parement (10) pouvant servir de parement extérieur et qui comporte au moins les éléments suivants :
- un ou plusieurs panneaux sandwich (11) comprenant au moins une première couche (12) thermiquement isolante qui est constituée d'un panneau de fibres de bois et une deuxième couche (13) qui assure la stabilité du mur, laquelle deuxième couche (13) est étanche à la vapeur et à l'air, lesquelles première et deuxième couches (12, 13) sont alignées et s'étendent jusqu'aux faces d'extrémité (18) des panneaux sandwich (11) ; et,
- une ou plusieurs bandes de caoutchouc allongées (15) pour recouvrir un côté tourné vers l'extérieur (16) des poutres (2) et des poteaux (3) contre lesquels un tel panneau sandwich (11) est appliqué et qui sont configurées pour être prévues entre les la deuxième couche (13) des panneaux sandwich (11) et ledit côté tourné vers l'extérieur des poutres (2) et des poteaux (3); et
- les couches des panneaux sandwich (11) et des lattes (20) éventuellement présentes, sont reliées entre elles uniquement au moyen de vis à bois autotaraudeuses (24).

2. Bardage préfabriqué (9) selon la revendication 1, **caractérisé en ce que** la seconde couche (13) assurant la stabilité de la paroi, est configurée pour assurer maintien de forme et stabilité dimensionnelle au bardage préfabriqué (9), et/ou de préférence est constituée d'un panneau de contreplaqué, d'un OSB (« Oriented Strand Board ») ou d'un panneau LVL (« Laminated Veneer Lumber »), et/ou a une épaisseur F d'au moins 33 mm.

3. Bardage préfabriqué (9) selon l'une quelconque des revendications 1 à 2, en ce que les panneaux sandwich (11) du premier parement (10) comportent une troisième couche de protection (14) destinée à la protection extérieure contre le vent et la pluie et qui peut également avoir une fonction porteuse, et/ou dans lequel cette troisième couche de protection (14) est constituée d'un panneau de fibres de bois appliqué contre la première couche thermiquement isolante (12), et/ou a une densité plus élevée que le bois panneau de fibres de la couche thermiquement isolante (12); de préférence une masse volumique comprise entre 250 kg/m3 et 280 kg/m3 et plus préférentiellement de 265 kg/m3.

4. Plancher préfabriqué (9) selon une ou plusieurs des revendications précédentes, noté en ce que le premier parement (10) est également pourvu d'un pare-vapeur (19) qui est prévu sur la deuxième couche (13).

5. Plancher préfabriqué (9) selon l'une ou plusieurs des revendications précédentes, notez en ce que les lattes (20) lorsqu'elles sont présentes sont constituées de lattes de bois prévues de part et d'autre (21, 22) et au centre (23) sur un tel panneau sandwich. (11) selon sa longueur, dans lequel les lattes (20) peuvent servir à supporter une façade suspendue ou à réaliser une toiture en dessue.

6. Plancher préfabriqué (9) selon une ou plusieurs des revendications précédentes, **caractérisé en ce que** le premier parement (10) comprend un joint en caoutchouc (17) qui a été configuré pour être prévu sur les faces d'extrémité (18) du panneaux sandwich (11) entre des panneaux sandwich (11) adjacents, de préférence **en ce que** le joint en caoutchouc (17) a une ou plusieurs des formes suivantes : une bavette ou un tapis en caoutchouc (42) sur chaque face d'extrémité (18) d'un panneau sandwich (11) avec des dimensions qui correspondent ou correspondent pratiquement aux dimensions de la face d'extrémité respective (18) du panneau sandwich (11);
- des profilés d'étanchéité en caoutchouc allongés (46) à section carrée (47), dont l'un est à chaque fois prévu entre deux panneaux sandwich (11) adjacents, plus précisément aux bords extérieurs (48) concernés de ces panneaux sandwich (11 );
- des bandes d'étanchéité en caoutchouc (49), dont un côté (50) est plat et dont le côté opposé (51) est convexe, et dans lequel chaque face d'extrémité (18) d'un panneau sandwich respectif (11) est pourvue d'une paire de tels des bandes d'étanchéité en caoutchouc (49), en particulier sur les lattes des liteaux (20) et au niveau des bords (52) situés le plus vers l'intérieur du panneau sandwich (11);
- des bandes de joint en caoutchouc (49), dont un côté (50) est plat et dont le côté opposé (51) est convexe, et dans lequel chaque face d'extrémité (18) d'un panneau sandwich respectif (11) est pourvue d'un tel joint en caoutchouc bande (49), en particulier au niveau des bords situés le plus à l'intérieur (52) du panneau sandwich (11).

7. Bardage préfabriqué (9) selon l'une quelconque des revendications 3 à 6, **caractérisé en ce que** la troisième couche de protection (14) a une largeur (B) égale à la largeur (B) de la couche thermiquement isolante (12) et de la deuxième couche assurant la stabilité (13) n'est pas alignée avec les autres couches (12, 13), mais est décalée d'une distance (A) par rapport à ces couches (12, 13).

8. Bardage préfabriqué (9) selon l'une ou plusieurs des revendications précédentes, noté en ce que le bardage préfabriqué (9) est également pourvu d'un deuxième revêtement (26) qui peut servir de revêtement intérieur et qui comprend au moins les éléments suivants :
- une couche thermiquement isolante (27) qui est formée par une ou plusieurs planches de fibres de bois et qui est à placer entre les poutres (2) et les poteaux (3) de l'ossature (1) contre les panneaux sandwich (11) de la première gaine (10); et,
- une couche de finition (28) constituée d'un ou plusieurs panneaux de placoplâtre à appliquer du côté des poutres (2) et poteaux (3) opposé au côté (29) de ces poutres (2) et poteaux (3) contre lequel les panneaux sandwich (11) du premier parement (10) du bardage préfabriqué (9) ont été ou seront appliqués, et/ou en ce que la première couche thermiquement isolante (12) du premier parement (10) du le bardage préfabriqué (9), qui est constitué d'un panneau de fibres de bois, et/ou la couche thermiquement isolante (27) du deuxième parement (26) du bardage préfabriqué (9), qui est formé par un ou plusieurs panneaux de fibres de bois, a une masse volumique située entre 145 kg/m3 et 175 kg/m3 et qui est de préférence de 160 kg/m3.

9. Bardage préfabriqué (9) selon la revendication 8, pourvu qu'entre la couche thermiquement isolante (27) et la couche de finition (28) du deuxième parement (26) soit laissée une cavité (30) pouvant servir d'espace intermédiaire pour l'installation et la dissimulation de canalisations (25).

10. Bardage préfabriqué (9) selon l'une ou plusieurs des revendications 8 à 9, en ce que la couche thermiquement isolante (27) du deuxième parement (26) a une épaisseur (D) qui est au plus la moitié de l'épaisseur (D' ) de la première couche (12) thermiquement isolante du premier revêtement (10).

11. Utilisation d'un bardage préfabriqué selon l'une ou plusieurs des revendications 1 à 10 comme mur extérieur sur un bâtiment à base portante.

12. Procédé d'application d'un bardage préfabriqué (9) selon l'une ou plusieurs des revendications 1 à 10 pour le revêtement de mur extérieur et/ou intérieur, isolant thermiquement et scellant l'ossature en bois (1) d'un bâtiment qui est érigé selon le procédé poutres-poteaux, dans lequel l'ossature en bois (1) est constituée d'une structure renforcée à angle droit de gros poteaux lourds (3) et de poutres (2), en ce que le procédé comprend au moins l'étape d'application des panneaux sandwich (11) du bardage préfabriqué (9) avec les bandes de caoutchouc (15) contre les côtés tournés vers l'extérieur du cadre (1) formé de poutres (2) et de poteaux (3) par l'un des procédés suivants :
- en les vissant au moyen de vis autotaraudeuses (33) ; ou, - par une fixation sans vis.

13. Procédé selon la revendication 12, en ce que le procédé comprend l'étape consistant à prévoir un joint en caoutchouc (17) contre une ou plusieurs des faces d'extrémité (18) des panneaux sandwich (11), destiné à être placé entre des panneaux sandwich attenants (11), et/ou dans lequel les panneaux sandwich (11) sont fixés avec des vis (33) et dans lequel, dans le cas où aucun deuxième revêtement (26) n'est appliqué, les vis (33) sont vissées depuis le côté (34) de les panneaux sandwich respectifs (11) vers le cadre (1), tandis que, dans le cas où un deuxième revêtement (26) est appliqué, les vis (33) sont vissées depuis le côté du cadre (1) vers les panneaux sandwich respectifs (11), et/ou dans lequel les panneaux sandwich (11) sont fixés sans vis au cadre (1) et dans lequel on utilise des éléments en forme de crochet (54) et des chevilles (55).

14. Procédé selon une ou plusieurs des revendications 12 à 13, **caractérisé en ce que** le procédé comprend l'étape consistant à prévoir un pare-vapeur (19) contre la seconde couche (13) des panneaux sandwich (11) du premier parement (10 ).

15. Procédé selon l'une ou plusieurs des revendications 12 à 14, en ce que le procédé comprend les étapes consistant à appliquer un deuxième parement (26) en prévoyant une couche thermiquement isolante (27) formée par une ou plusieurs planches de fibres de bois entre les poutres ( 2) et poteaux (3) de l'ossature (1) contre les panneaux sandwich (11) du premier bardage (10) et vissage avec des vis autotaraudeuses (32, 33), et application d'une couche de finition (28) constitué d'un ou plusieurs panneaux de placoplâtre du côté (29) des poutres (2) et poteaux (3), qui est opposé au côté (16) de ces poutres (2) et poteaux (3) et contre lequel les panneaux sandwich (11) du premier revêtement (10) sont appliqués, et/ou en ce que, lors de la réalisation du premier revêtement (10), des panneaux sandwich (11) sont utilisés qui sont pourvus de lattes (20), une façade suspendue étant ensuite suspendu à ces lattes (20) ou une toiture est prévue sur les lattes (20).
